# EUROPEAN PATENT APPLICATION

(11) **EP 4 382 348 A1**
(43) Date of publication of application: **12.06.2024**
(21) Application number: 22852163.9
(22) Date of filing: 02.08.2022
(51) Int. Cl.: B60L 53/16, H01R 13/627

(54) **ELECTRIC VEHICLE CHARGING SOCKET AND VEHICLE**

(30) Priority: 03.08.2021 CN 202121797433 U
(71) Applicant: Changchun Jetty Automotive Technology Co., Ltd., Changchun City, Jilin Province 130000 (CN)
(72) Inventor: WANG, Chao, Changchun City, Jilin 130000 (CN)
(74) Representative: Habermann, Hruschka & Schnabel
(86) International application number: PCT/CN2022/109655
(87) International publication number: WO 2023/011451

(57) **Abstract**

The present disclosure provides an electric vehicle charging socket and a vehicle, including: a device fixed to a vehicle body; at least one charging inner core including an inner core frame and an electric connection device, the inner core frame being detachably connected with the device fixed to the vehicle body. For the electric vehicle charging socket provided by the present disclosure, when the electric connection device needs to be repaired or replaced, there is no need to remove the device fixed to the vehicle body from the vehicle body of the electric vehicle, which facilitates repair and replacement of the electric connection device.

## Description

### RELATED APPLICATION

The present disclosure claims the priority of the Chinese utility model patent application with the application number 202121797433.6, which was submitted on August 3, 2021, and disclosure of which are cited as part of the present disclosure.

### TECHNICAL FIELD

The present disclosure relates to the technical field of electric vehicle charging, particularly to an electric vehicle charging socket and a vehicle.

### BACKGROUND

With resource depletion of gasoline fuel and enhancement of human environmental protection awareness, electric vehicles have become a development direction of future vehicles, and charging systems which supplement energy for electric vehicles have also been developing faster and faster.

For a charging socket in a current charging system, a direct current inner core and an alternating current inner core are fixed on a same stand by means of welding or crimping, and when some terminals of the charging socket need to be repaired or replaced due to excessive times of insertion and removal or due to a damage caused by a short circuit, it needs to demount the stand on the charging socket together with the direct current inner core and the alternating current inner core from the charging socket, replacement is very inconvenient, and even in a disassembly process, due to an improper operation or overexertion, it may cause a damage to the inner cores or the stand, which is not only time-consuming and laborious, but also increases the cost.

Thus, a new solution is urgently needed in prior arts to solve said problem.

### SUMMARY OF INVENTION

The present disclosure provides an electric vehicle charging socket and a vehicle, to solve the problem that existing electric vehicle charging sockets are inconvenient to be disassembled when a terminal is repaired or replaced.

Embodiments of a first aspect of the present disclosure provide an electric vehicle charging socket, including: a device fixed with a vehicle body; at least one charging inner core including an inner core frame and an electric connection device, the inner core frame being detachably connected with the device fixed to the vehicle body.

Embodiments of a second aspect of the present disclosure provide a vehicle, including the electric vehicle charging socket in the embodiments of the first aspect.

Features and advantages of the electric vehicle charging socket and the vehicle in the present disclosure are listed as follows:
1. In the present disclosure, by detachably connecting the inner core frame with the device fixed to the vehicle body, when the electric connection device needs to be repaired or replaced, the inner core frame may be removed from the device fixed to the vehicle body so as to repair or replace the electric connection device on the inner core frame, without also removing the device fixed to the vehicle body from the charging socket, which greatly facilitates repair and replacement of the electric connection device and also avoids a damage to the device fixed to the vehicle body;
2. In the present disclosure, by detachably connecting the electric connection device with a base of electric connection device, when the electric connection device needs to be repaired or replaced, it only needs to demount the electric connection device from the base of electric connection device, without removing the base of electric connection device, which further facilitates repair and replacement of the electric connection device and also avoids a damage to the base of electric connection device;
3. In the present disclosure, by providing an anti-misinstallation structure on the device fixed to the vehicle body, the direct current inner core and the alternating current inner core, it is easy to accurately install the two charging inner cores to a correct position, which prevents incorrect installation;
4. In the present disclosure, by providing a control board and a temperature sensor for detecting a temperature of the electric connection device, a charging current can be controlled according to a temperature signal of the temperature sensor to ensure the charging safety.

### BRIEF DESCRIPTION OF DRAWINGS

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art can further obtain other drawings based on the drawings under the premise without paying any creative effort. In the drawings:
FIG. 1 is a schematic diagram of a device fixed with a vehicle body in an embodiment of the present disclosure;
FIG. 2 is a schematic diagram of a charging inner core in an embodiment of the present disclosure;
FIG. 3 is a left side view of FIG. 2;
FIG. 4 is a stereoscopic exploded view of the charging inner core;
FIG. 5 is a main view of the charging inner core;
FIG. 6 is a schematic diagram of a charging socket in an embodiment of the present disclosure;
FIG. 7 is a schematic diagram of a device fixed with a vehicle body in FIG. 6;
FIG. 8 is a schematic diagram of a direct current charging inner core in FIG. 6;
FIG. 9 is a schematic diagram of an alternating current charging inner core in FIG. 6.

### DETAILED DESCRIPTION

Referring to the drawings, through the following Specification, the above and other features of the present disclosure will become obvious. The Specification and the figures specifically disclose particular implementations of the present disclosure, showing partial implementations which can adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "include" and "have", etc. refer to the presence of stated features, elements, members or components, but do not preclude the presence or addition of one or more other features, elements, members or components. In the description of the present disclosure, unless otherwise explained, "a plurality of" means two or more. In the description of the present disclosure, unless otherwise explained, the term "connection" should be understood broadly, for example it may be a fixed connection, may be a detachable connection, may be a direct direction, or may be a direct connection via an intermediate medium. For persons skilled in the art, a specific meaning of said term in the present patent may be understood according to a specific circumstance.

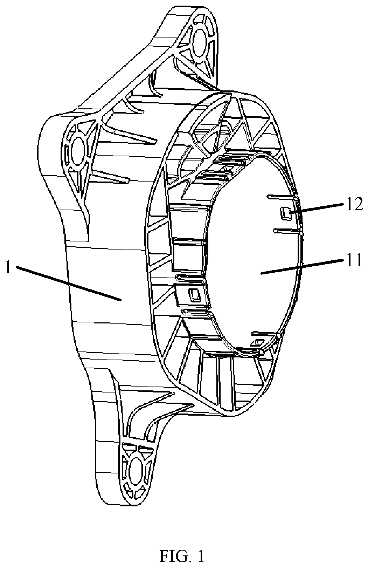

Embodiments of a first aspect of the present disclosure provide an electric vehicle charging socket, as shown in FIGS. 1, 2, 5 and 6, including a device 1 fixed with a vehicle body, and at least one charging inner core 2, the device 1 fixed to the vehicle body is used for installing the charging inner core 2, for example the device 1 fixed to the vehicle body is a bracket structure, the charging inner core 2 includes an inner core frame 21 and an electric connection device 22, the electric connection device 22 is installed on the inner core frame 21. In the charging socket, the electric connection device 22 is often inserted and removed with a charging device, and is also a main part for conducting a charging current. In the course of long-term use, not only frequent insertion and removal operations resulting in deformation of the electric connection device 22 and a coating damage, and even ignition and melting of the electric connection device 22 as a result of an excessive current, thus the electrical connection device 22 cannot achieve functions thereof. In addition, the electric connection device 22 is exposed to an external environment, and will be corroded by water or salt in the environment, which will also cause the electrical performance of the electric connection device 22 to fail to meet the requirements. Therefore, in the whole charging socket, the electric connection device 22 is the most vulnerable component, but at present, for most of the charging sockets, the electric connection device 22 is fixed on a charging socket body and is connected with a cable 8 by welding. When the electric connection device 22 is damaged, it needs to remove the electric connection device 22, the fixing portions and the cable 8 all from the charging socket and replace them, and in serious cases, the whole charging socket needs to be replaced. Tedious repair operations, long repair time and high repair cost are one of the main problems restricting the development of the charging vehicle at present.

In the electric vehicle charging socket provided by the present disclosure, the inner core frame 21 is detachably connected with the device 1 fixed to the vehicle body. When the electric connection device 22 needs to be repaired or replaced, the inner core frame 21 may be removed from the device 1 fixed to the vehicle body so as to repair or replace the electric connection device 22 on the inner core frame 21, without also removing the device 1 fixed to the vehicle body from the charging socket, which greatly facilitates repair and replacement of the electric connection device 22.

In an embodiment, the inner core frame 21 is circular truncated, i.e., a diameter of one end of the inner core frame 21 is smaller, a diameter of the other end of the inner core frame 21 is larger, an end with a smaller diameter of the inner core frame 21 is inserted into the device 1 fixed to the vehicle body, and is detachably connected with the device 1 fixed to the vehicle body. In the present embodiment, by setting the inner core frame 21 to be circular truncated, it is easy to insert the inner core frame 21 into the device 1 fixed to the vehicle body.

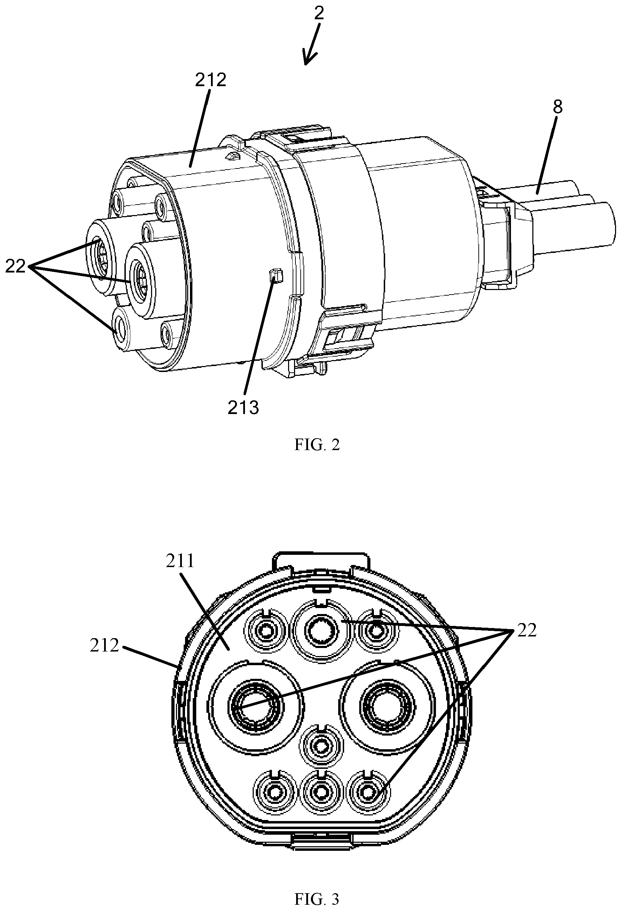

For the device 1 fixed to the vehicle body in an embodiment, as shown in FIGS. 1 and 2, the number of the charging inner cores 2 is 1, the charging inner core 2 is a direct current charging inner core 3 for direct current charging, or the charging inner core 2 is an alternating current charging inner core 4 for alternating current charging.

In the present embodiment, for example the inner core frame 2 is connected with the device 1 fixed to the vehicle body by means of a snap-fit connection, a snap-fit structure 12 is provided on the device 1 fixed to the vehicle body, a complementary snap-fit structure 213 fit with the snap-fit structure is provided on an outer wall of the charging inner core 2, for example one of the snap-fit structure and the complementary snap-fit structure is a snap-fit slot and the other is a snap-fit buckle.

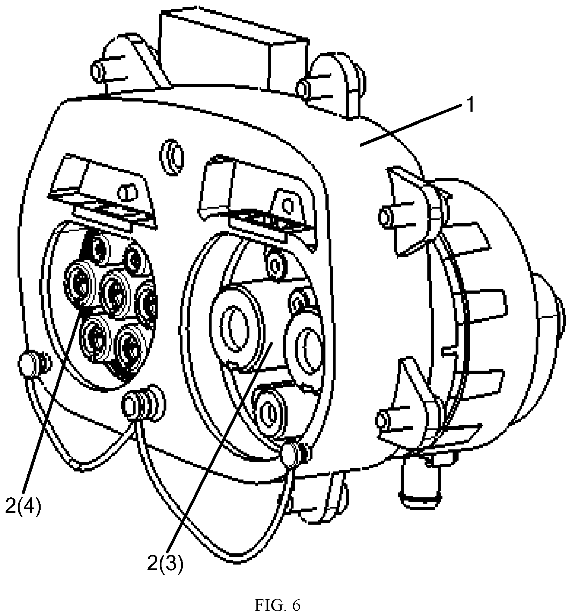

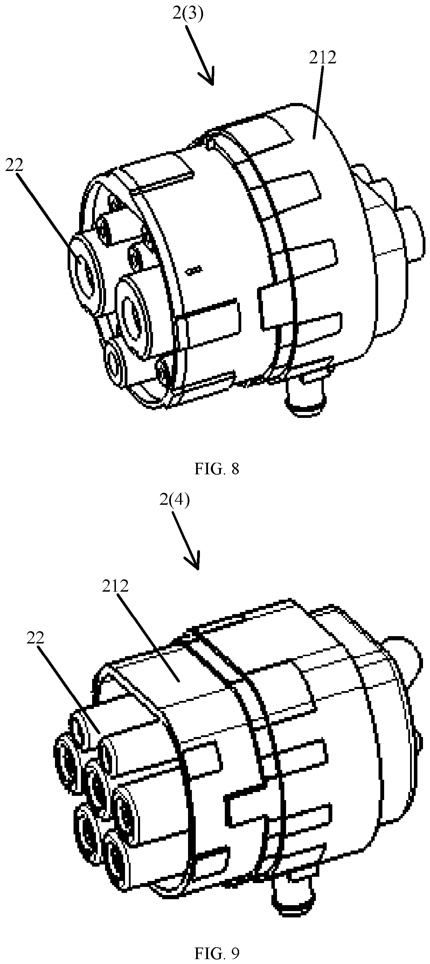

In another embodiment, as shown in FIGS. 6, 8 and 9, the number of the charging inner cores 2 is two, the two charging inner cores 2 are a direct current charging inner core 3 and an alternating current charging inner core 4, respectively, hence the charging socket in the present embodiment can be used for both direct current charging and alternating current charging, which is very convenient to use.

In an embodiment, the inner core frame 21 is connected with the device 1 fixed to the vehicle body via a snap connection or a threaded coupling or a snap-fit connection or a screw connection, of course they may also be connected via other existing detachable connection modes.

In the present embodiment, the snap connection refers to that the inner core frame 21 further includes a groove, the device 1 fixed to the vehicle body further includes a spring and a hook, pressing the inner core frame 21 connects or disengages the groove with the hook, and the spring disengages the inner core frame 21 from the device 1 fixed to the vehicle body.

Specifically, a mounting groove is provided on the device 1 fixed to the vehicle body, the spring is provided in the mounting groove, one end of the hook abuts against the spring, the other end of the hook is located outside of the mounting groove. When pressing the inner core frame 21, the groove on the inner core frame 21 engages with the hook, so as to realize the connection between the inner core frame 21 and the device 1 fixed to the vehicle body. When pressing the inner core frame 21 again, the groove on the inner core frame 21 is disengaged from the hook, so as to realize disassembly of the inner core frame 21 and the device 1 fixed to the vehicle body, the operation is very simple. The snap connection adopted in the present disclosure is a prior art, and has the same structure and principle as an existing press latch, thus will not be described with reference to the drawings.

In the present embodiment, an external thread is provided outside the inner core frame 21, an internal thread is provided in the device 1 fixed to the vehicle body, the external thread is in a threaded coupling with the internal thread. Through the threaded coupling between the inner core frame 21 and the device 1 fixed to the vehicle body, the inner core frame 21 can be installed and disassembled easily and quickly, which realizes an automated assembly process. And when a charging socket is repaired, the inner core frame can also be replaced quickly, which improves production and repair efficiency, and saves the cost.

In the present embodiment, when the external thread is in a threaded coupling with the internal thread, a torque of the threaded coupling is 0.1N•m to 17N•m.

In order to verify the influence of a torque range when the external thread is in a threaded coupling with the internal thread on the connection between the inner core frame 21 and the device 1 fixed to the vehicle body, the inventor selects the same inner core frame 21 and device 1 fixed to the vehicle body, and screws them together with different torques to test the connection between the inner core frame 21 and the device 1 fixed to the vehicle body subjected to a vibration test. A test result is shown in Table 1.

In the vibration test, a connected sample is placed on a vibration test table, and subjecting them to 300 vibration cycles, with vibrations applied in 6 directions at a frequency of 100Hz and an acceleration of 40m/s2 in one direction during each cycle, and then whether the inner core frame 21 and the device 1 fixed to the vehicle body have a loosening phenomenon is observed. In the present embodiment, they are unqualified when the inner core frame 21 and the device 1 fixed to the vehicle body are loose or damaged during installation.

**Table 1 Influence of different torques on the connection**

| Torques (N·m) of threaded coupling between the inner core frame 21 and the device 1 fixed to the vehicle body | | | | | | | | | | | | | |
|---|---|---|---|---|---|---|---|---|---|---|---|---|---|
| 0.01 | 0.05 | 0.1 | 0.5 | 1 | 3 | 5 | 7 | 10 | 13 | 15 | 17 | 20 | 23 |

| Connection between the inner core frame 21 and the device 1 fixed to the vehicle body | | | | | | | | | | | | | |
|---|---|---|---|---|---|---|---|---|---|---|---|---|---|
| Loose | Loose | Not loose | Not loose | Not loose | Not loose | Not loose | Not loose | Not loose | Not loose | Not loose | Not loose | Damaged | Damaged |

As can be seen from the above Table 1, when a torque value in case of a threaded coupling between the external thread and the internal thread is less than 0.1 N•m, the inner core frame 21 and the device 1 fixed to the vehicle body are loose after the vibration test. When the torque value in case of the threaded coupling between the external thread and the internal thread is greater than 17 N•m, due to a too large torque, a torsion force applied to the inner core frame 21 and the device 1 fixed to the vehicle body is too large, resulting in that the inner core frame 21 and the device 1 fixed to the vehicle body which are made of a plastic material are damaged by a greater pressure, thereby a basic function of the charging socket cannot be realized. Therefore, the inventor determines a torque range when the external thread is in a threaded coupling with the internal thread is 0.1 N•m to 17 N•m.

In this embodiment, a snap-fit slot is provided in the device fixed to the vehicle body, a snap-fit piece is provided on the inner core frame and is clamped to the snap-fit slot so as to fix the inner core frame in the device fixed to the vehicle body, a snap-fit operation is more convenient, and it is convenient to realize automatic production and mass production.

In this embodiment, since two charging inner cores 2 are provided, in order to facilitate accurate installation of the two charging inner cores 2 to correct positions and prevent incorrect installation, different snap-fit structures can be set on the two charging inner cores 2 as an anti-misinstallation structure to further facilitate installation.

As shown in FIG. 6, specifically, a first snap-fit structure and a second snap-fit structure are provided on the device 1 fixed to the vehicle body, respectively for snap-fit the inner core frame 21 of the direct current charging inner core 3 and the inner core frame 21 of the alternating current charging inner core 4. For ease of description, the inner core frame 21 of the direct current charging inner core 3 is called a first inner core frame, and the inner core frame 21 of the alternating current charging inner core 4 is called a second inner core frame. A first complementary snap-fit structure that can be clamped with the first snap-fit structure is provided on the first inner core frame, a first complementary snap-fit structure that can be clamped with the second snap-fit structure is provided on the second inner core frame, the first complementary snap-fit structure corresponds to the first snap-fit structure and is misaligned with the second snap-fit structure, hence the first complementary snap-fit structure may only form snap-fit with the first snap-fit structure, and cannot form snap-fit with the second snap-fit structure, the second complementary snap-fit structure corresponds to the second snap-fit structure and is misaligned with the first snap-fit structure, so the second complementary snap-fit structure may only form snap-fit with the second snap-fit structure, and cannot form snap-fit with the first snap-fit structure.

When the device 1 fixed to the vehicle body is provided with a cavity 11, the first snap-fit structure and the second snap-fit structure may be disposed on an inner wall of the cavity 11, correspondingly, the first complementary snap-fit structure is provided on an outer wall of the first inner core frame, and the second complementary snap-fit structure is provided on an outer wall of the second inner core frame.

For example, one of the first snap-fit structure and the first complementary snap-fit structure is a latch hook or a snap-fit buckle and the other is a snap-fit slot, one of the second snap-fit structure and the second complementary snap-fit structure is a latch hook or a snap-fit buckle and the other is a snap-fit slot, the structure is simple, and the snap-fit is stable.

Further, in order to improve connection reliability, a plurality of first snap-fit structures and a plurality of second snap-fit structures are provided on the device 1 fixed to the vehicle body, a plurality of first complementary snap-fit structures corresponding to the plurality of first snap-fit structures are provided on the first inner core frame, a plurality of second complementary snap-fit structures corresponding to the plurality of second snap-fit structures are provided on the second inner core frame, thus the device 1 fixed to the vehicle body is connected with the first inner core frame via a plurality of snap-fit structures, the device 1 fixed to the vehicle body is connected with the second inner core frame via a plurality of snap-fit structures, the connection is reliable and is not easy to loose.

In an embodiment, the inner core frame 21 may be connected with the device 1 fixed to the vehicle body via a screw, a screw through-hole is provided on the inner core frame 21, the screw can pass through the screw through-hole, but a screw cap cannot pass through the screw through-hole. An internal thread hole is provided on the device 1 fixed to the vehicle body to match an external thread of the screw. By tightening the screw, the inner core frame 21 may be fixed onto the device 1 fixed to the vehicle body.

Further, in order to improve fastness for the inner core frame 21 to be mounted onto the device 1 fixed to the vehicle body, the number of screw connections may be multiple.

Further, the internal thread hole may be a built-in or pre-embedded internal thread stud which may be pre-fixed in the device 1 fixed to the vehicle body by means of assembly or integrated injection molding. More further, the internal thread stud may be made of a metal material to improve a fixing force with the screw.

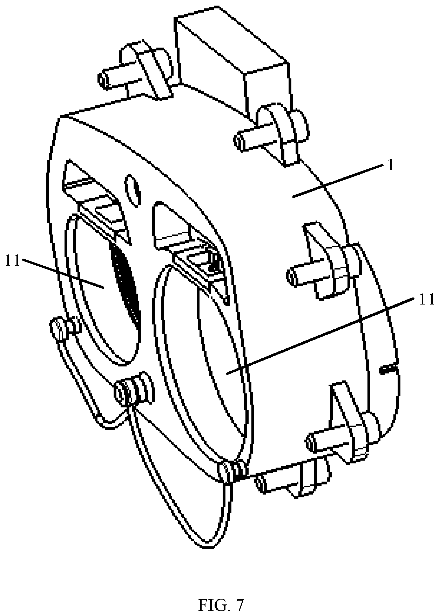

In an embodiment, as shown in FIGS. 1 and 7, the device 1 fixed to the vehicle body has a cavity 11 for accommodating the charging inner core 2, the number of the cavities 11 is equal to the number of the charging inner cores 2, each cavity accommodates one charging inner core 2.

Specifically, a shape of the cavity 11 matches a shape of the inner core frame 21. When the inner core frame 21 is circular truncated, the shape of the cavity 11 is also circular truncated, an end with a smaller diameter of the inner core frame 21 is inserted into the cavity 11.

In an embodiment, an end of the cavity 11 is provided with a dust cover to prevent foreign matters such as dust from entering the cavity 11. The dust cover is detachably connected with the device 1 fixed to the vehicle body, disassembly and assembly are convenient. Moreover, the dust cover may further play protective and anti-bumping effects on the charging inner core 2 in the cavity 11.

In an embodiment, the dust cover is made of a rubber material, the rubber material has a certain elasticity, which can make the dust cover interference fit in the cavity 11, and seals the cavity 11 by relying on its own elasticity to isolate external water from entering the cavity 11, and ensures that the charging socket has a longer service life.

In an embodiment, the electric connection device 22 is connected with the inner core frame 21 via a plug-in connection, a snap-fit connection, a threaded coupling or a screw connection, of course they may also be connected via other existing detachable connection modes.

Further, the electric connection device 22 is connected with the inner core frame 21 via a plug-in connection, which means that an installation position of the electric connection device 22 and the inner core frame 21 is configured as interference fit, a fixed connection between the electric connection device 22 and the inner core frame 21 is realized through mutual plug-in of the electric connection device 22 and the inner core frame 21 and a friction between the two. During disassembly, detach the electric connector device 22 by tapping it in reverse, so that the electric connection device 22 disengages from the inner core frame 21.

Further, the electric connection device 22 is connected with the inner core frame 21 via a snap-fit connection, which means that a snap-fit jaw is provided on the electric connection device 22, a snap-fit slot is provided on the inner core frame 21, the electric connection device 22 and the inner core frame 21 may be connected fixedly through a mutual fit connection of the snap-fit jaw and the snap-fit slot, the snap-fit jaw disengages from the snap-fit slot at the time of disassembly, and the electric connection device 22 disengages from the inner core frame 21.

Further, the electric connection device 22 is connected with the inner core frame 21 via a threaded coupling, which means that an external thread is provided on the electric connection device 22, an internal thread is provided on the inner core frame 21, the electric connection device 22 and the inner core frame 21 are fixed together by tightening the external thread and the internal thread, and the electric connection device 22 is unscrewed reversely at the time of disassembly.

In this embodiment, for example, when the electric connection device 22 is connected with the inner core frame 21 via a threaded coupling, a torque of the threaded coupling is 0.1N•m to 30N•m.

In order to verify the influence of a torque of the threaded coupling between the electric connection device 22 and the inner core frame 21 on a connection situation, the inventor selects the same electric connection device 22 and inner core frame 21, tightens them together with different torques, and tests a connection between the electric connection device 22 and the inner core frame 21 subjected to a vibration test. A test result is shown in Table 2.

**Table 2 Influence of different torques on the connection**

| Torques (N·m) of threaded coupling between the electric connection device 22 and the inner core frame 21 | | | | | | | | | | | | | |
|---|---|---|---|---|---|---|---|---|---|---|---|---|---|
| 0.01 | 0.05 | 0.1 | 0.5 | 1 | 3 | 5 | 10 | 15 | 20 | 25 | 30 | 32 | 35 |

| Connection between the electric connection device 22 and the inner core frame 21 | | | | | | | | | | | | | |
|---|---|---|---|---|---|---|---|---|---|---|---|---|---|
| Loose | Loose | Not loose | Not loose | Not loose | Not loose | Not loose | Not loose | Not loose | Not loose | Not loose | Not loose | Damaged | Damaged |

As can be seen from the above Table 2, when a torque value in case of a threaded coupling between the electric connection device 22 and the inner core frame 21 is less than 0.1 N•m, the electric connection device 22 and the inner core frame 21 are loose after the vibration test. When the torque value in case of the threaded coupling between the electric connection device 22 and the inner core frame 21 is greater than 30 N•m, due to a too large torque, a torsion force applied to the electric connection device 22 and the inner core frame 21 is too large, resulting in that the inner core frame 21 which is made of a plastic material is damaged by a greater pressure, thereby a basic function of the charging socket cannot be realized. Therefore, the inventor determines a torque range when the electric connection device 22 is in a threaded coupling with the inner core frame 21 is 0.1 N•m to 30 N•m.

Further, the electric connection device 22 is connected with the inner core frame 21 via a screw connection, which means that a mounting hole is provided on the electric connection device 22, an internal thread hole is provided on the inner core frame 21 to match an external thread of the screw. By tightening the screw, the electric connection device 22 may be fixed onto the inner core frame 21.

Further, in order to improve fastness for the electric connection device 22 to be mounted onto the inner core frame 21, the number of screw connections may be multiple.

Further, the internal thread hole may be a built-in or pre-embedded internal thread stud which may be pre-fixed in the inner core frame 21 by means of assembly or integrated injection molding. More further, the internal thread stud may be made of a metal material to improve a fixing force with the screw.

In an embodiment, as shown in FIGS. 3, 4 and 5, the inner core frame 21 includes a base of electric connection device 211 and a housing 212, the housing 212 is sleeved at an outer side of the base of electric connection device 211, the electric connection device 22 is detachably connected with the base of electric connection device 211, i.e., the electric connection device 22 is mounted on the base of electric connection device 211, the housing 212 is detachably connected with the device 1 fixed to the vehicle body, for example the housing 212 is a cylindrical structure with two open ends, the base of electric connection device 211 and the electric connection device 22 are located inside the housing 212.

In this embodiment, since the electric connection device 22 is detachably connected with the base of electric connection device 211, when the electric connection device 22 needs to be repaired or replaced, it only needs to demount the electric connection device 22 from the base of electric connection device 211, without removing the entire base of electric connection device 211, which further facilitates repair and replacement of the electric connection device 22.

In this embodiment, further, the electric connection device 22 is connected with the base of electric connection device 211 via a plug-in connection, a snap-fit connection, a threaded coupling or a screw connection, of course they may also be connected via other existing detachable connection modes.

Further, the electric connection device 22 is connected with the base of electric connection device 211 via a plug-in connection, which means that an installation position of the electric connection device 22 and the base of electric connection device 211 is configured as interference fit, a fixed connection between the electric connection device 22 and the base of electric connection device 211 is realized through mutual plug-in of the electric connection device 22 and the base of electric connection device 211 and a friction between the two, so that the electric connection device 22 disengages from the base of electric connection device 211.

Further, the electric connection device 22 is connected with the base of electric connection device 211 via a snap-fit connection, which means that a snap-fit jaw is provided on the electric connection device 22, a snap-fit slot is provided on the base of electric connection device 211, the electric connection device 22 and the base of electric connection device 211 may be connected fixedly through a mutual fit connection of the snap-fit jaw and the snap-fit slot, the snap-fit jaw disengages from the snap-fit slot at the time of disassembly, and the electric connection device 22 disengages from the base of electric connection device 211.

Further, the electric connection device 22 is connected with the base of electric connection device 211 via a threaded coupling, which means that an external thread is provided on the electric connection device 22, an internal thread is provided on the base of electric connection device 211, the electric connection device 22 and the base of electric connection device 211 are fixed together by tightening the external thread and the internal thread, and the electric connection device 22 is unscrewed reversely at the time of disassembly.

In this embodiment, for example, when the electric connection device 22 is connected with the base of electric connection device 211 via a threaded coupling, a torque of the threaded coupling is 0.1N•m to 30N•m.

In order to verify the influence of a torque of the threaded coupling between the electric connection device 22 and the base of electric connection device 211 on a connection situation, the inventor selects the same electric connection device 22 and base of electric connection device 211, tightens them together with different torques, and tests a connection between the electric connection device 22 and the base of electric connection device 211 subjected to a vibration test. A test result is shown in Table 3.

**Table 3 Influence of different torques on the connection**

| Torques (N·m) of threaded coupling between the electric connection device 22 and the base of electric connection device 211 | | | | | | | | | | | | | |
|---|---|---|---|---|---|---|---|---|---|---|---|---|---|
| 0.01 | 0.05 | 0.1 | 0.5 | 1 | 3 | 5 | 10 | 15 | 20 | 25 | 30 | 32 | 35 |

| Connection between the electric connection device 22 and the base of electric connection device 211 | | | | | | | | | | | | | |
|---|---|---|---|---|---|---|---|---|---|---|---|---|---|
| Loose | Loose | Not loose | Not loose | Not loose | Not loose | Not loose | Not loose | Not loose | Not loose | Not loose | Not loose | Damaged | Damaged |

As can be seen from the above Table 3, when a torque value in case of a threaded coupling between the electric connection device 22 and the base of electric connection device 211 is less than 0.1 N•m, the electric connection device 22 and the base of electric connection device 211 are loose after the vibration test. When the torque value in case of the threaded coupling between the electric connection device 22 and the base of electric connection device 211 is greater than 30 N•m, due to a too large torque, a torsion force applied to the electric connection device 22 and the base of electric connection device 211 is too large, resulting in that the base of electric connection device 211 which is made of a plastic material is damaged by a greater pressure, thereby a basic function of the charging socket cannot be realized. Therefore, the inventor determines a torque range when the electric connection device 22 is in a threaded coupling with the base of electric connection device 211 is 0.1 N•m to 30 N•m.

Further, the electric connection device 22 is connected with the base of electric connection device 211 via a screw connection, which means that a mounting hole is provided on the electric connection device 22, an internal thread hole is provided on the base of electric connection device 211 to match an external thread of the screw. By tightening the screw, the electric connection device 22 may be fixed onto the base of electric connection device 211.

Further, in order to improve fastness for the electric connection device 22 to be mounted onto the base of electric connection device 211, the number of screw connections may be multiple.

Further, the internal thread hole may be a built-in or pre-embedded internal thread stud which may be pre-fixed in the base of electric connection device 211 by means of assembly or integrated injection molding. More further, the internal thread stud may be made of a metal material to improve a fixing force with the screw.

In this embodiment, for example, a material of the base of electric connection device 211, the housing 212 and the device 1 fixed to the vehicle body is a plastic material, the weight is light and the production cost is low. if the plastic material is selected, on one hand, an injection molding production mode may be adopted to obtain the base of electric connection device 211, the housing 212 and the device 1 fixed to the vehicle body, having complex shapes and the consistent product performance, on the other hand, a high insulating property of the plastic material can further ensure the insulating performance of the charging socket during use.

In this embodiment, further, the number of the electric connection devices 22 is multiple. For example, the number of the electric connection devices 22 is 2 to 36, such as 5 or 9, and a size of each electric connection device may be the same or may be different. The electric connection device 22 may be simplified to be charged using only two charging cables, other circuits may be integrated into the charging device or battery. Corresponding electric connection device 22 may also be included in 36 circuits of a direct current connector and an alternating current connector.

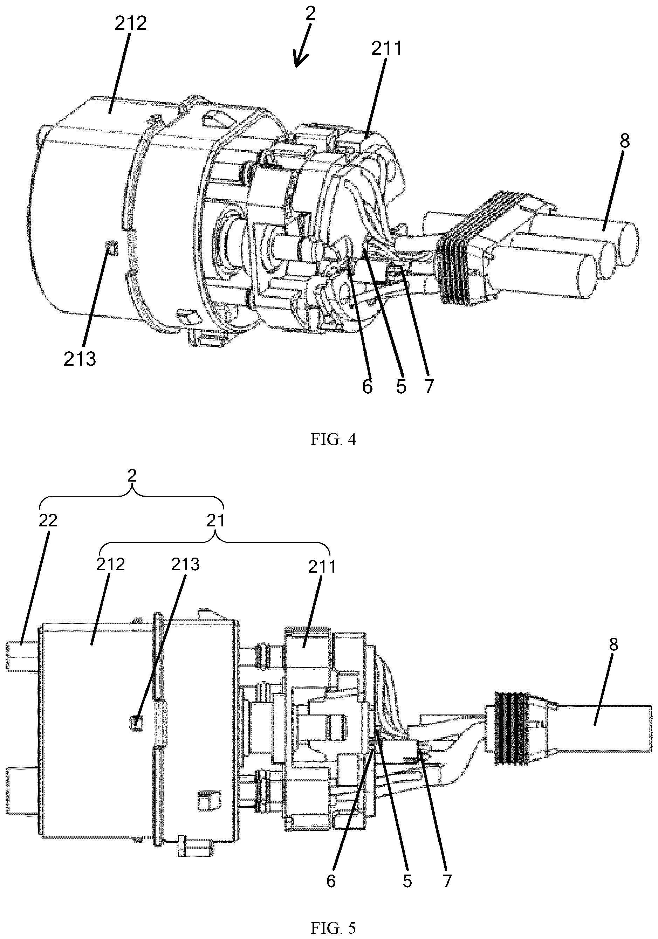

In this embodiment, further, as shown in FIGS. 4 and 5, the base of electric connection device 211 is provided with a control board 5 and a temperature sensor 6 for detecting a temperature of the electric connection device 22, the temperature sensor 6 is electrically connected with the control board 5 via a data line 7, a temperature signal transmission of the electric connection device 22 is transmitted to the control board 5 via the data line 7. In addition, the temperature sensor may be directly connected with the electric connection device 22 and obtain a temperature value of the electric connection device 22 in real time, and passes the same to the control board. By adjusting a charging current of the control board, the temperature value of the electric connection device 22 is controlled, so that the measurement accuracy of a temperature of the electric connection device 22 is close to or equal to a theoretical absolute value, it has extremely high detection accuracy and a fast output capacity.

Specifically, for example, the control board 5 is a circuit board which can control a charging current according to a temperature signal of the temperature sensor 6.

Further, the control board 5 is a circuit board in which a control logic circuit is provided. Through the control logic circuit, when a detection temperature of the temperature sensor is higher than a set temperature, the control board issues a warning message to realize real-time temperature monitoring; and when the detection temperature of the temperature sensor exceeds the set temperature by a certain value, the control board 5 controls the charging inner core 2 to disconnect automatically so as to avoid a danger caused by a too high temperature.

The temperature sensor 6 may be an NTC temperature sensor 6 or a PTC temperature sensor 6.

Advantages of using these two temperature sensors are that they are small in volume and can measure a gap which cannot be measured by other thermometers; they are easy to use, a resistance value may be arbitrarily selected between 0.1kΩ and 100 kω; they are easily machined into complex shapes, may be produced in mass, have good stability and a strong overload capacity, and are suitable for a product such as an adapter which requires a small volume and stable performance.

In an embodiment, as shown in FIGS. 4 and 5, the electric connection device 22 is electrically connected with a power source of an electric vehicle via the cable 8.

Embodiments of a second aspect of the present disclosure provide a vehicle, including the electric vehicle charging socket in the embodiments of the first aspect. Since a structure, a working principle and advantageous effects of the electric vehicle charging socket have been described in details in the embodiments of the first aspect, their contents are combined here and are omitted here.

The above contents are only schematic specific implementations of the present disclosure and are not intended to limit the scope of the present disclosure. An equivalent change and amendment made by any person skilled in the art without deviating from the idea and principle of the present disclosure should fall into the scope protected by the present disclosure. And what needs illustration is that each constituent part of the present disclosure is not limited to the overall application described above, each technical feature described in the Specification of the present disclosure may be selected to be used separately or selected to be used in combination according to an actual need. Therefore, the present disclosure, as a matter of course, covers other combinations and specific applications related to the inventive points of the present case.

## Claims

1. An electric vehicle charging socket, wherein the charging socket comprises:
a device fixed with a vehicle body;
at least one charging inner core comprising an inner core frame and an electric connection device, the inner core frame being detachably connected with the device fixed to the vehicle body.

2. The electric vehicle charging socket according to claim 1, wherein the inner core frame is circular truncated, an end with a smaller diameter of the inner core frame is inserted into the device fixed to the vehicle body, and is detachably connected with the device fixed to the vehicle body.

3. The electric vehicle charging socket according to claim 1, wherein the number of the charging inner cores is one, and the charging inner core is a direct current charging inner core or an alternating current charging inner core.

4. The electric vehicle charging socket according to claim 1, wherein the number of the charging inner cores is two, the two charging inner cores are a direct current charging inner core and an alternating current charging inner core, respectively.

5. The electric vehicle charging socket according to any one of claims 1 to 4, wherein the inner core frame is connected with the device fixed to the vehicle body via a snap connection or a threaded coupling or a snap-fit connection or a screw connection.

6. The electric vehicle charging socket according to claim 5, wherein the snap connection refers to that the inner core frame further comprises a groove, the device fixed to the vehicle body further comprises a spring and a hook, pressing the inner core frame connects or disengages the groove with the hook, and the spring disengages the inner core frame from the device fixed to the vehicle body.

7. The electric vehicle charging socket according to claim 5, wherein an external thread is provided outside the inner core frame, an internal thread is provided in the device fixed to the vehicle body, the external thread is in a threaded coupling with the internal thread.

8. The electric vehicle charging socket according to claim 7, wherein when the external thread is in a threaded coupling with the internal thread, a torque of the threaded coupling is 0.1N•m to 17N•m.

9. The electric vehicle charging socket according to claim 5, wherein a snap-fit slot is provided in the device fixed to the vehicle body, a snap-fit piece is provided on the inner core frame and is clamped to the snap-fit slot to fix the inner core frame in the device fixed to the vehicle body.

10. The electric vehicle charging socket according to claim 4, wherein a first snap-fit structure and a second snap-fit structure are provided on the device fixed to the vehicle body;
the inner core frame of the direct current charging inner core is a first inner core frame on which a first complementary snap-fit structure is capable of snapping with the first snap-fit structure is provided, the first complementary snap-fit structure corresponds to the first snap-fit structure and is misaligned with the second snap-fit structure;
the inner core frame of the alternating current charging inner core is a second inner core frame on which a second complementary snap-fit structure is capable of snapping with the second snap-fit structure is provided, the second complementary snap-fit structure corresponds to the second snap-fit structure and is misaligned with the first snap-fit structure.

11. The electric vehicle charging socket according to claim 10, wherein
one of the first snap-fit structure and the first complementary snap-fit structure is a latch hook and the other is a snap-fit slot;
one of the second snap-fit structure and the second complementary snap-fit structure is a latch hook and the other is a snap-fit slot.

12. The electric vehicle charging socket according to claim 10, wherein a plurality of first snap-fit structures and a plurality of second snap-fit structures are provided on the device fixed to the vehicle body, a plurality of first complementary snap-fit structures corresponding to the plurality of first snap-fit structures are provided on the first inner core frame, a plurality of second complementary snap-fit structures corresponding to the plurality of second snap-fit structures are provided on the second inner core frame.

13. The electric vehicle charging socket according to any one of claims 1 to 4, wherein the device fixed to the vehicle body has a cavity for accommodating the charging inner core.

14. The electric vehicle charging socket according to claim 13, wherein an end of the cavity is provided with a dust cover which is detachably connected with the device fixed to the vehicle body.

15. The electric vehicle charging socket according to claim 14, wherein the dust cover is made of a rubber material.

16. The electric vehicle charging socket according to any one of claims 1 to 4, wherein the electric connection device is detachably connected with the inner core frame.

17. The electric vehicle charging socket according to claim 16, wherein the electric connection device is connected with the inner core frame via a plug-in connection, a snap-fit connection, a threaded coupling or a screw connection.

18. The electric vehicle charging socket according to claim 17, wherein in case of the threaded coupling, a torque of the threaded coupling is 0.1N•m to 30N•m.

19. The electric vehicle charging socket according to any one of claims 1 to 4, wherein the inner core frame comprises a base of electric connection device and a housing, the housing is sleeved at an outer side of the base of electric connection device, the electric connection device is detachably connected with the base of electric connection device, the housing is detachably connected with the device fixed to the vehicle body.

20. The electric vehicle charging socket according to claim 19, wherein the electric connection device is connected with the base of electric connection device via a plug-in connection, a snap-fit connection, a threaded coupling or a screw connection.

21. The electric vehicle charging socket according to claim 20, wherein in case of the threaded coupling, a torque of the threaded coupling is 0.1 N•m to 30N•m.

22. The electric vehicle charging socket according to claim 19, wherein the material of the base of electric connection device, the housing and the device fixed to the vehicle body is a plastic material.

23. The electric vehicle charging socket according to claim 1, wherein the number of the electric connection devices is multiple.

24. The electric vehicle charging socket according to claim 23, wherein the number of the electric connection devices is 2 to 36.

25. The electric vehicle charging socket according to claim 19, wherein the base of electric connection device is provided with a control board and a temperature sensor for detecting a temperature of the electric connection device, the temperature sensor is electrically connected with the control board via a data line.

26. The electric vehicle charging socket according to claim 25, wherein the control board is a circuit board which is capable of controlling a charging current according to a temperature signal of the temperature sensor.

27. The electric vehicle charging socket according to claim 25, wherein the temperature sensor is an NTC temperature sensor or a PTC temperature sensor.

28. A vehicle, comprising the electric vehicle charging socket according to any one of claims 1 to 27.
